# DEMANDE DE BREVET EUROPEEN

(11) **EP 2 610 826 A1**
(43) Date de publication de la demande: **03.07.2013**
(21) Numéro de dépôt: 11306811.8
(22) Date de dépôt: 29.12.2011
(51) Int. Cl.: G07F 7/10, H04L 29/06

(54) **Procédé de déclenchement d'une session OTA**

(71) Demandeur: Gemalto SA, 92190 Meudon (FR)
(72) Inventeur: Merrien, Lionel, Montreal, Québec H4K1Y3 QC (CA); Preulier, Eric, Austin, TX Texas 78727 (US); Amiel, Patrice, 13705 La Ciotat (FR)

(57) **Abrégé**

L'invention concerne un procédé de déclenchement d'une session OTA dans un réseau de radiocommunication mobile à la demande d'un utilisateur d'un terminal mobile. La session OTA est établie entre le terminal mobile et un serveur OTA distant, le terminal mobile comprenant un élément de sécurité tel qu'une carte UICC.

Selon l'invention, le procédé consiste à :
i - composer (11) un code spécifique à l'aide de l'interface homme-machine dudit terminal mobile ;
ii - intercepter (12) ledit code spécifique par ledit élément de sécurité ;
iii - ouvrir (13) ladite session OTA entre ledit terminal mobile et ledit serveur distant en mode sécurisé.

## Description

Le domaine de l'invention est celui des télécommunications et notamment celui du déclenchement de sessions OTA dans un réseau de type LTE (Long Term Evolution en anglais), encore appelé réseau de quatrième génération (4G).

La technologie LTE s'appuie sur un réseau de transport de paquets IP. Elle n'a pas prévu de mode d'acheminement pour la voix, autre que la VoIP, contrairement à la 3G qui transporte la voix en mode circuit (à la manière des réseaux de téléphonie fixes classiques).

Une session OTA a pour finalité d'administrer à distance un élément de sécurité, tel qu'une carte UICC, inséré dans un terminal de télécommunication, par exemple un téléphone mobile. La carte UICC peut également se présenter sous la forme d'un circuit intégré soudé directement dans le terminal mobile et est dans ce cas appelé e-UICC.

Une session OTA peut s'opérer en mode « push » ou en mode « pull ».

En mode « pull », le déclenchement de la session OTA est laissé à l'initiative de l'élément de sécurité dans le terminal. L'élément de sécurité détermine le moment opportun pour déclencher une session OTA sur la base d'évènements techniques détectables par l'élément de sécurité, tels que le changement de terminal (dans le cas d'une UICC portable d'un terminal à un autre), le changement de réseau, la fin d'une minuterie, etc...

En mode « push », c'est la plate-forme OTA qui décide à quel moment elle doit envoyer des données à l'élément de sécurité. Le mode push requiert la présence d'un canal « push » externe à la session OTA elle-même, car le canal IP nécessaire a la session OTA ne peut être ouvert que par le terminal (client), et non par le serveur. Ce canal « push » peut être par exemple un canal SMS, ou un canal USSD ou un canal SIP.

Certains scénarios OTA, comme par exemple le changement de numéro de téléphone, requiert une mise-à-jour immédiate de l'élément de sécurité. Dans certains cas, il n'y pas de canal « push » disponible (pas de SMS ou pas de SIP), et il n'y a pas non plus d'événement technique qui permettrait de déclencher la session OTA.

L'invention concerne la génération d'un évènement technique directement par l'utilisateur, pour le déclenchement de session OTA. L'utilisateur demande donc, de sa propre initiative, la mise à jour de données et/ou de programmes destinés à son élément de sécurité.

Dans un réseau de type LTE, le téléchargement de données et/ou de programmes dans l'élément de sécurité est réalisé en utilisant un protocole sécurisé par exemple de type https. Ce protocole est initié par l'utilisateur du terminal c'est-à-dire faite par l'élément de sécurité. Dans la plupart des cas, l'élément de sécurité exploite un événement contextuel tel que par exemple son insertion dans un nouveau terminal, l'écoulement d'un laps de temps depuis la dernière session OTA, sa position géographique (par exemple le franchissement d'une frontière) ou tout autre événement initiateur d'une demande de session OTA.

Dans un réseau de type 3G, lorsque aucun événement contextuel n'est disponible et lorsqu'une session OTA est immédiatement nécessaire, le serveur OTA peut envoyer un message, par exemple un SMS, à l'élément de sécurité pour lui demander d'initier une session OTA. Ceci se produit par exemple lorsque l'utilisateur demande à son opérateur de changer son numéro de téléphone. Cependant, cette solution n'est pas applicable s'il n'existe pas de moyen d'envoyer un SMS du serveur OTA à l'élément de sécurité. Ce cas de figure se présente notamment dans le cas de réseaux de type LTE où il n'est pas possible d'envoyer de SMS (toutes les transmissions passent par un réseau de type IP).

Différentes solutions existent pour résoudre ce problème :
- il est possible de détecter la mise sous tension du terminal pour ouvrir un canal https afin de contacter la plate-forme OTA pour demander un téléchargement de programmes et/ou données ;
- il est également possible pour l'utilisateur de consulter un menu de type STK, c'est-à-dire chercher dans les différentes applications de son terminal celle lui permettant de contacter la plate-forme OTA.

Ces solutions nécessitent néanmoins des manipulations non commodes pour l'utilisateur (éteindre et rallumer son terminal ou naviguer dans les différents menus de son terminal).

La présente invention a notamment pour objectif de remédier à ces inconvénients.

À cet effet, la présente invention propose un procédé de déclenchement d'une session OTA dans un réseau de radiocommunication mobile à la demande d'un utilisateur d'un terminal mobile, la session OTA étant établie entre le terminal mobile et un serveur OTA distant, le terminal mobile comprenant un élément de sécurité tel qu'une carte UICC.

Ce procédé consiste à :
i - composer un code spécifique à l'aide de l'interface homme-machine du terminal mobile ;
ii - intercepter le code spécifique par l'élément de sécurité ;
iii - ouvrir la session OTA entre le terminal mobile et le serveur distant en mode sécurisé.

Dans un mode de mise en oeuvre préférentiel, l'interface homme-machine du terminal est le clavier du terminal mobile.

Dans un autre mode de mise en oeuvre, l'interface homme-machine est un dispositif de reconnaissance vocale compris dans le terminal mobile

Préférentiellement, le code spécifique est un mot de passe unique généré par un serveur de mots de passe uniques, le mot de passe unique étant transmis au terminal mobile pour que son utilisateur en ait connaissance, le mot de passe unique transmis au terminal étant comparé avec un mot de passe unique généré par l'élément de sécurité et, si le mot de passe unique reçu par le terminal et composé par l'utilisateur est identique à celui généré par l'élément de sécurité, lancer les étapes ii et iii.

L'invention trouve une application toute particulière dans un réseau de type LTE.

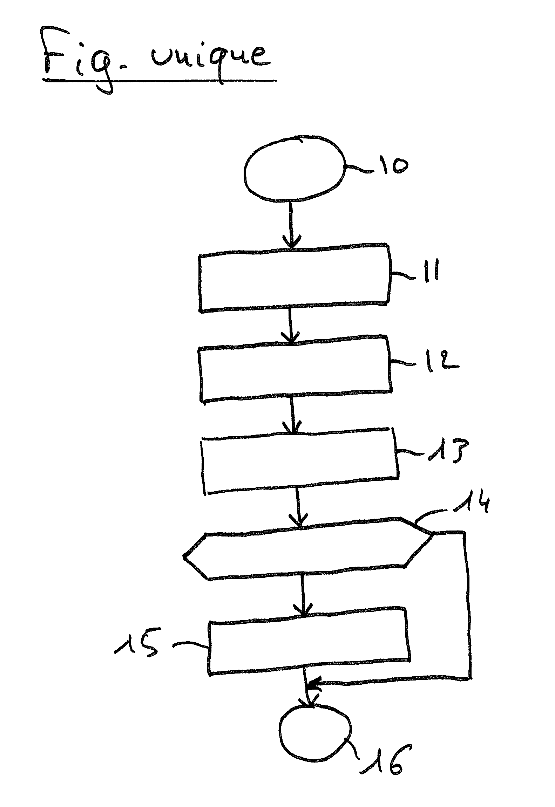

D'autres caractéristiques et avantages de l'invention apparaîtront à la lecture de la description suivante d'un mode de mise en oeuvre préférentiel, donné à titre illustratif et non limitatif, et de la figure unique annexée montrant ce mode de mise en oeuvre préférentiel.

L'invention propose de déclencher une session OTA dans un réseau de radiocommunication mobile à la demande d'un utilisateur d'un terminal mobile (c'est-à-dire en mode « pull »). La session OTA doit être établie entre le terminal mobile et un serveur OTA distant. Le terminal mobile comprend un élément de sécurité tel qu'une carte UICC extractible du terminal ou alors un circuit intégré faisant office de carte UICC soudé dans le terminal mobile (e-UICC).

Dans la figure unique annexée, l'étape 10 est une étape de début.

L'invention consiste à composer un code spécifique à l'aide de l'interface homme-machine du terminal mobile. Cette étape, notée 11, consiste par exemple à saisir un code tel que *555 sur le clavier du terminal. Ce code a précédemment été fourni à l'utilisateur par son opérateur. L'interface homme-machine est typiquement le clavier du terminal mobile. Il peut également s'agir d'une commande vocale. Le terminal comprend alors un dispositif de reconnaissance vocale.

À l'étape 12, l'élément de sécurité intercepte le code spécifique (par exemple *555) afin qu'il ne soit pas composé. Le contrôle des appels par l'élément de sécurité est décrit dans le standard ETSI TS 102.223. L'élément de sécurité, après avoir reconnu ce code spécifique, ouvre alors une session OTA entre le terminal mobile et le serveur OTA distant en mode sécurisé, par exemple en mode https (étape 13).

Lors d'une étape 14, le serveur OTA vérifie si des données ou des programmes doivent être téléchargés dans l'élément de sécurité. Si c'est le cas, lors d'une étape 15, ce téléchargement est opéré. Dans le cas contraire le processus s'arrête avec une étape de fin 16.

Dans un mode de mise en oeuvre préférentiel de l'invention, afin que les utilisateurs (abonnés à un opérateur), ne requièrent pas trop fréquemment de mise à jour de leurs éléments de sécurité, le code spécifique peut être remplacé par un mot de passe unique (OTP en anglais - One Time Password). Ce mot de passe unique est généré par un serveur de mots de passe uniques. Pour un terminal donné, le mot de passe unique est transmis (via l'opérateur) au terminal pour que son utilisateur en ait connaissance. Le mot de passe unique transmis au terminal est comparé avec un mot de passe unique généré, lui, par l'élément de sécurité et, si le mot de passe unique reçu par le terminal (et stocké de préférence dans l'élément de sécurité) et composé par l'utilisateur est identique à celui généré par l'élément de sécurité, le procédé reprend à l'étape 12.

Ce mot de passe unique peut être généré par une clé comprise dans l'élément de sécurité et un compteur partagé entre le serveur OTA et l'UICC. Si les deux coïncident, l'utilisateur est en droit de demander une mise à jour par OTA de son élément de sécurité.

## Revendications

1. Procédé de déclenchement d'une session OTA dans un réseau de radiocommunication mobile à la demande d'un utilisateur d'un terminal mobile, ladite session OTA étant établie entre ledit terminal mobile et un serveur OTA distant, ledit terminal mobile comprenant un élément de sécurité tel qu'une carte UICC,
**caractérisé en ce qu'**il consiste à :
i - composer (11) un code spécifique à l'aide de l'interface homme-machine dudit terminal mobile ;
ii - intercepter (12) ledit code spécifique par ledit élément de sécurité ;
iii - ouvrir (13) ladite session OTA entre ledit terminal mobile et ledit serveur distant en mode sécurisé.

2. Procédé selon la revendication 1, **caractérisé en ce que** ladite interface homme-machine dudit terminal est le clavier dudit terminal mobile.

3. Procédé selon la revendication 1, **caractérisé en ce que** ladite interface homme-machine dudit terminal est un dispositif de reconnaissance vocale compris dans ledit terminal mobile.

4. Procédé selon l'une des revendications 1 à 3, **caractérisé en ce que** ledit code spécifique est un mot de passe unique généré par un serveur de mots de passe uniques, ledit mot de passe unique étant transmis audit terminal mobile pour que son utilisateur en ait connaissance, ledit mot de passe unique transmis audit terminal étant comparé avec un mot de passe unique généré par ledit élément de sécurité et, si ledit mot de passe unique reçu par ledit terminal et composé par ledit utilisateur est identique à celui généré par ledit élément de sécurité, lancer les étapes ii et iii.

5. Procédé selon l'une des revendications 1 à 4, **caractérisé en ce qu'**il est mis en oeuvre dans un réseau de type LTE.
